(19)

**Europäisches Patentamt**
**European Patent Office**
**Office européen des brevets**

(11)    **EP 2 495 638 A1**

(12)    **EUROPEAN PATENT APPLICATION**
published in accordance with Art. 153(4) EPC

(43) Date of publication:
05.09.2012 Bulletin 2012/36

(21) Application number: 10826458.1

(22) Date of filing: 28.09.2010

(51) Int Cl.:
*G06F 3/041* (2006.01)      *G06F 3/048* (2006.01)
*G06F 3/14* (2006.01)      *G09G 5/00* (2006.01)

(86) International application number:
**PCT/JP2010/066759**

(87) International publication number:
**WO 2011/052324 (05.05.2011 Gazette 2011/18)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: 28.10.2009 JP 2009248066

(71) Applicant: NEC Corporation
Tokyo 108-8001 (JP)

(72) Inventor: **TOMIMORI, Hiroyuki**
**Tokyo 108-8001 (JP)**

(74) Representative: **Vossius & Partner**
**Siebertstrasse 4**
**81675 München (DE)**

(54)    **MOBILE INFORMATION TERMINAL, PROCESSING METHOD, AND PROGRAM**

(57)    A mobile information terminal includes a display unit having two or more display screens, a touch-panel input unit that senses contact with each of the display screens, and a processing unit that, when a predetermined touch operation is carried out upon the two adjacent display screens, recognizes that a component that is in a predetermined region between two points that were touched in the predetermined touch operation that was carried out upon the two display screens has been designated.

Fig.1

**Description**

TECHNICAL FIELD

The present invention relates to a mobile information terminal that is equipped with a touch-panel input unit that is constructed unified with a display unit.

Background Art

Mobile information terminals, of which mobile telephones, PDAs (Personal Digital Assistants), and electronic notebooks are representative, are typically equipped with a display unit that displays text and images by a display screen such as liquid crystal and an input unit that receives commands and data as input by means of a user's operations.
In some mobile information terminals, touch panels are employed as the input unit. For example, Patent Document 1 discloses an information terminal that employs a touch panel in its input unit. The adoption of the touch panel enables greater screen size with respect to device size than a construction in which the display unit and input unit are arranged in different positions.
In a mobile information terminal that employs a touch panel in its input unit, UI (User Interface) components such as icons that are displayed on the display are designated by touch operations upon the touch panel. Typically, when the UI component is an icon, the UI component is selected by a single touch operation, and processing according to the UI component is executed by a continued touch operation that corresponds to double-clicking. Alternatively, when the UI component is a Web page link or a program button, the process according to the UI component is executed by a single touch operation. In the following explanation, selection and execution of a UI component are referred to as "designation."
In a mobile information terminal of a configuration in which UI components are included in images displayed on a display and in which UI components are designated by touch operations to the touch panel, a UI component is typically designated by a one-point touch to the UI component that is the object of control. Alternatively, there is also a technique in which the object of control is designated by a clip resulting from a two-point touch.
In addition, some mobile information terminals are equipped with a plurality of display screens as a display unit. For example, Patent Document 3 discloses a mobile information terminal of a configuration that has an opening and closing folding construction having a plurality of cases, each of the plurality of cases being equipped with a display screen. The mobile information terminal disclosed in Patent Document 3 can provide a large screen in the opened state but is compact and portable in the closed state.

RELATED ART LITERATURE

Patent Documents

Patent Document 1: JP 2009-522669A, Publication
Patent Document 2: JP 2002-304256A, Publication
Patent Document 3: JP 2009-0760338A, Publication

SUMMARY OF THE INVENTION

Problem to be Solved by the Invention

Nevertheless, in a mobile information terminal that is equipped with a plurality of display screens and touch-panel input means that senses contact to each of these screens, a boundary occurs between display screen and display screen. As a result, when one original image is divided and displayed on a plurality of display screens, UI components such as icons may sometimes be positioned at the border of a plurality of display screens. In such cases, the touch operation for designating the UI component becomes difficult and ease of operation suffers.
It is an object of the present invention to provide a technique for improving the ease of operation of designating a UI component at the border between a display screen and a display screen on a mobile information terminal that has a plurality of display screens and touch-panel input means that senses contact to each of these screens.
To achieve the above-described object, the mobile information terminal of the present invention includes: a display unit having two or more display screens; a touch-panel input unit that senses contact with each of the display screens; and a processing unit that, when a predetermined touch operation is carried out upon the two adjacent displays screens, recognizes that a component in a predetermined region between two points that were touched in the predetermined touch operation that was carried out upon the two adjacent display screens, has been designated.

In addition, to achieve the above-described object, the processing method of the present invention is a processing method that is applied in a mobile information terminal having two or more display screens and a touch-panel input means that senses contact with each of the display screens and includes steps of detecting a predetermined touch operation that is carried out upon two adjacent display screens and recognizing a component in a predetermined region between two points that were touched that were touched in the predetermined touch operation that was carried out upon said two display screens as being designated.

In addition, to achieve the above-described object, the program of the present invention causes a computer to execute a process of detecting a predetermined touch operation that is carried out upon two adjacent display screens of a mobile information terminal having two or more display screens and a touch-panel input means that senses contact with each of the display screens and a process of recognizing a component in a predetermined region between two points that were touched in the predetermined touch operation that was carried out upon said two display screens as being designated.

Effect of the Invention

According to the present invention, the ease of operation can be improved when designating a UI component at the border between a display screen and a display screen in a mobile information terminal having a plurality of display screens and a touch-panel input means that senses contact with each of the screens.

BRIEF DESCRIPTION OF THE DRAWINGS

FIG. 1 is a diagram for describing an example of a method of designating a UI component in a mobile information terminal.
FIG. 2 is a block diagram showing the configuration of a mobile information terminal in the first exemplary embodiment.
FIG. 3 is a diagram for describing an example of a method for calculating designated coordinates.
FIG. 4 is a diagram in which points on touch panels 310 and 320 are represented by the coordinate system of touch panel 310.
FIG. 5 is a flow chart showing the process for simultaneous operations of processing unit 100 shown in FIG. 2.
FIG. 6A is a diagram in which points on touch panels 310 and 320 are represented by the coordinate system of touch panel 310.
FIG. 6B is a diagram in which points on touch panels 310 and 320 are represented by the coordinate system of touch panel 310.
FIG. 7 is a diagram in which points on touch panels 310 and 320 are represented by the coordinate system of touch panel 310.
FIG is a block diagram showing the configuration of the mobile information terminal in the fourth exemplary embodiment.
FIG. 9A is a diagram showing an example of the display of an image on a mobile information terminal having two display screens arranged horizontally.
FIG. 9B is a diagram showing an example of the display of an image when a predetermined region is copied and displayed on the mobile information terminal shown in FIG. 9A.
FIG. 10 is a diagram for describing an example in which the coordinates of the midpoint of two points A and B is taken as the designated coordinates in the coordinate system of the seventh exemplary embodiment.
FIG. 11 is a diagram for describing an example in which coordinates at the intersection between line AB and the screen border are taken as the designated coordinates in the coordinate system of the seventh exemplary embodiment.

EXEMPLARY EMBODIMENTS

The present invention is next described in detail with reference to the accompanying drawings.

First Exemplary Embodiment

The mobile information terminal of the first exemplary embodiment has two display screens and two touch panels, each touch panel being arranged on a respective display screen. When touch operations are carried out simultaneously on the touch panels on the two display screens, a UI component such as an icon, button, or link to a Web page that is at the midpoint of the two points subjected to the touch operation for each touch panel is recognized as having been designated.

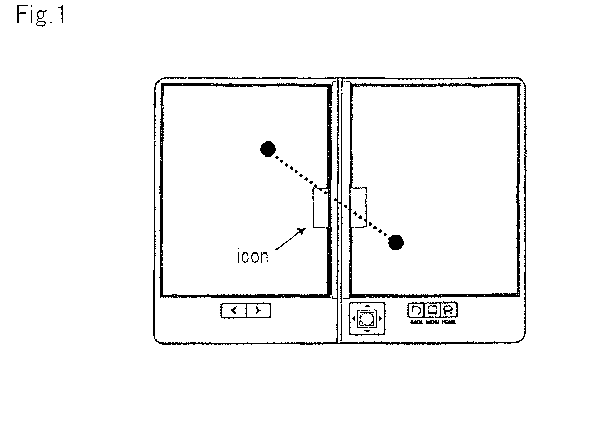

FIG. 1 is a diagram for describing an example of the method of designating a UI component in a mobile information terminal having two display screens and a touch panel on each display screen. In the example shown in FIG. 1, an icon is present that is located at the border (hereinafter referred to as the screen border) portion between a display screen and a display screen, thereby interfering with a touch operation for designating the icon. At such times, when the user simultaneously touches the two black dots that are shown in FIG. 1, the mobile information terminal recognizes that the midpoint of the two points subjected to the touch operation has been designated.

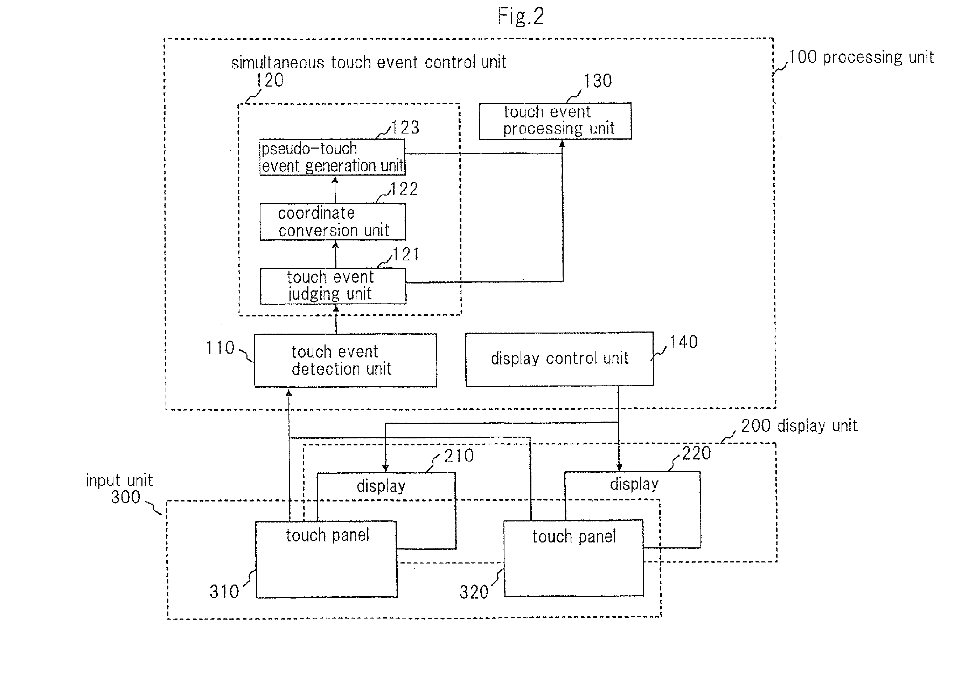

FIG. 2 is a block diagram showing the configuration of the mobile information terminal of the first exemplary embodiment.

As shown in FIG. 2, the mobile information terminal in the first exemplary embodiment has processing unit 100, display unit 200, and input unit 300. Processing unit 100 has touch event detection unit 110, simultaneous touch event control unit 120, touch event processing unit 130, and display control unit 140. Simultaneous touch event control unit 120 has touch event judging unit 121, coordinate conversion unit 122, and pseudo-touch event generation unit 123.

Display unit 200 is a display device having two display screens. Display unit 200 of the present exemplary embodiment has display 210 and display 220 that are arranged adjacent to each other.

Input unit 300 is an input device having touch panels that are each arranged on a respective display screen. Input unit 300 of the present exemplary embodiment has touch panel 310 and touch panel 320. Touch panel 310 is arranged on the screen of display 210 and touch panel 320 is arranged on the screen of display 220. Each touch panel is assigned a touch-panel ID that is a number for identifying each touch panel.

Each touch panel detects touch operations from the user and reports touch information indicating the state of the touch operation to touch event detection unit 110. Touch operations are predetermined operations realized by a touch pen or by a user's hand or finger to a touch panel. Touch information includes the touch-panel ID of each touch panel, information indicating whether touching has occurred, and information of the coordinates that were touched.

Processing unit 100 controls all operations of the mobile information terminal.

Touch event detection unit 110 receives the touch information from each touch panel of input unit 300 and generates touch event information based on the touch information that was received. The touch event information includes the touch-panel ID of the touch panel that was the event origin, the coordinates on the touch panel, the event occurrence time, and the event type. The event type is information indicating the type of event, such as a touch event indicating that the user's hand, finger, or touch pen has touched a touch panel, a drag event that indicates the occurrence of sliding while maintaining touch, and a release event that indicates that separation from the touch panel.

Touch operations carried out at the same time upon the two touch panels are referred to as simultaneous touch operations. In addition, an operation of sliding while maintaining touch of two points that are touched on each touch panel by simultaneous touch operations is referred to as a simultaneous drag operation. Still further, an operation of simultaneously releasing the touch of two points that are touched on each touch panel by means of simultaneous touch operations is referred to as a simultaneous release operation. Simultaneous touch operations, simultaneous drag operations, and simultaneous release operations are together referred to as simultaneous operations.

Touch event detection unit 110 reports the generated touch event information to touch event judging unit 121.

When the touch event information that is received from touch event detection unit 110 is not a result of simultaneous operations, simultaneous touch event control unit 120 generates new touch event information that is designated by the simultaneous operations and notifies touch event processing unit 130.

Touch event judging unit 121 receives the touch event information from touch event detection unit 110 and analyzers the touch event information that was received.

Upon receiving two items of touch event information in which the event origins are different touch panels, the difference in event occurrence times is within a predetermined time interval, and the event types are both touch events, touch event judging unit 121 judges that simultaneous touch operations have been carried out.

In addition, once touch event judging unit 121 has judged that simultaneous touch operations have been carried out, touch event judging unit 121 judges that the simultaneous touch operations continue until receiving touch event information in which the event origin is any of the touch panels and the event type is a release event. When simultaneous touch operations are continuing and event information is received in which the event origin is any of the touch panels and the event type is a release event, touch event judging unit 121 judges that the simultaneous touch operation has been cancelled.

Alternatively, when simultaneous touch operations are continuing and event information is received in which the event origin is any of the touch panels and the event type is a drag event, touch event judging unit 121 judges that a simultaneous drag operation has been carried out.

When simultaneous touch operations are continuing and two items of touch event information are received in which the event origins are different touch panels, the difference in event occurrence times is within a predetermined time interval, and the event types are both release events, touch event judging unit 121 judges that a simultaneous release operation has been carried out. At this time, touch event judging unit 121 judges that the simultaneous touch operations have been cancelled.

When touch event judging unit 121 has judged that the touch event information received from touch event detection unit 110 is not the result of simultaneous operations, touch event judging unit 121 transmits the touch event information that was received to touch event processing unit 130 without alteration.

On the other hand, when touch event judging unit 121 judges that the touch event information received from touch event detection unit 110 is the result of simultaneous operations, touch event judging unit 121 transmits the touch event information that was received to coordinate conversion unit 122.

Upon receiving touch event information from touch event judging unit 121, coordinate conversion unit 122 calculates the designated coordinates that are designated by each operation based on the coordinates on the touch panel that are included in the touch event information that was received.

When the touch event information is the result of simultaneous touch operations, coordinate conversion unit 122 of the present exemplary embodiment takes, as the designated coordinate, the coordinates of the midpoint of the coordinates on each touch panel that are included in the two items of touch event information that were generated at the two touch panels and that were received from touch event judging unit 121.

When the touch event information is a result of simultaneous drag operations, coordinate conversion unit 122 takes, as the designated coordinates, the coordinates of the midpoint of the coordinates on the touch panels that are included in each of the newest touch event information, that is received from touch event judging unit 121 for the two touch panels.

When the touch event information is a result of simultaneous release operations, coordinate conversion unit 122 takes, as the designated coordinates, the coordinates of the midpoint of the coordinates on each touch panel that are included in the two items of touch event information that were generated in the two touch panels and that were received from touch event judging unit 121.

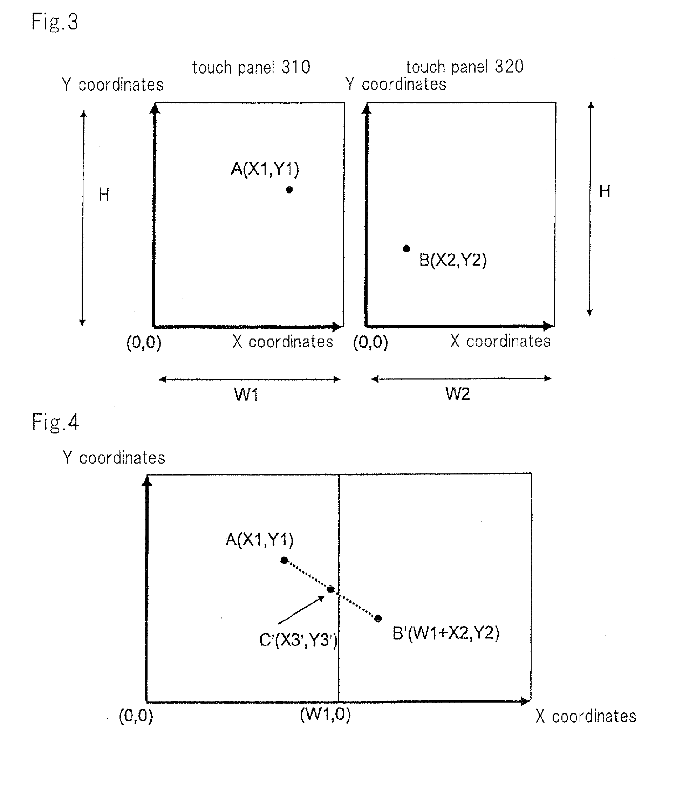

FIG. 3 is a diagram for describing an example of the method of calculating designated coordinates. In the example shown in FIG. 3, touch panel 10, in which the number of pixels in the same direction as the screen border is H and the number of pixels in the direction that is perpendicular to the screen border is W1, and touch panel 320, in which the number of pixels in the same direction as the screen border is H and the number of pixels in the direction perpendicular to the screen border is W2, are arranged adjacent to each other.

The following explanation uses a coordinate system in which the direction perpendicular to the screen border is the X-axis and the direction that is the same as the screen border is the Y-axis. Each point in this coordinate system represents a pixel on a touch panel, the coordinates of the left lowermost pixel on a touch panel being assumed to be (0, 0). The range of coordinates of the pixels of touch panel 310 is assumed to be $0 \leq X < W1$ and $0 \leq Y < H$. The range of the pixels of touch panel 320 is assumed to be $0 \leq X < W2$ and $0 \leq Y < H$.

In this mobile information terminal, it is assumed that point A at coordinates (X1, Y1) of touch panel 310 and point B at coordinates (X2, Y2) of touch panel 320 are touched at the same time.

In the present exemplary embodiment, when one original image is displayed divided between two displays 210 and 220, the coordinates of touch panels 310 and 320 that correspond to two displays 210 and 220 are treated as integrated in a single coordinate system. It is here assumed that the coordinate system of touch panel 320 is integrated with the coordinate system of touch panel 310. Accordingly, the coordinates in touch panel 310 are represented by the coordinate system of touch panel 310 without alteration but the coordinates in touch panel 320 are expressed converted to the coordinate system of touch panel 310.

FIG. 4 is a diagram in which the points on touch panels 310 and 320 are represented by the coordinate system of touch panel 310. Although in actuality a physical gap typically exists between touch panel 310 and touch panel 320, in the coordinate system that includes two touch panels 310 and 320, touch panel 310 and touch panel 320 are treated as being contiguous along the border. In FIG. 4, it is assumed that the borderline on the left side of touch panel 320 is contiguous with the borderline on the right side of touch panel 310, and point B on touch panel 320 is treated as converted to the coordinate system of touch panel 310.

The coordinates (X2, Y2) of point B are converted to point B' (W1 + X2, Y2) in the coordinate system of touch panel 310.

If the midpoint of point A and point B' is C' (X3', Y3'), X3' is expressed by Formula (1) and Y3' is expressed by Formula (2).

$$X3' = (X1 + W1 + X2) / 2 \qquad\qquad (1)$$

$$Y3' = (Y1 + Y2) / 2 \qquad (2)$$

Here, when Formula (3) holds, midpoint C' exists on touch panel 320. On the other hand, when Formula (3) does not hold, midpoint C' exists on touch panel 310.

$$X3' \geq W1 \qquad (3)$$

When Formula (3) holds, midpoint C' exists on touch panel 320, and if the designation coordinates on touch panel 320 are C (X3, Y3), X3 is expressed by Formula (4) and Y3 is expressed by Formula (5).

$$X3 = (X1 + W1 + X2) / 2 - W1 \qquad (4)$$

$$Y3 = (Y1 + Y2) / 2 \qquad (5)$$

On the other hand, when Formula (3) does not hold, midpoint C' exists on touch panel 310, and if the designated coordinates on touch panel 10 are C (X3, Y3), X3 is expressed by Formula (6) and Y3 is expressed by Formula (7).

$$X3 = (X1 + W1 + X2) / 2 \qquad (6)$$

$$Y3 = (Y1 + Y2) / 2 \qquad (7)$$

Coordinate conversion unit 122 uses Formula (3) to distinguish on which of touch panel 310 and touch panel 320 midpoint C' is present and uses Formulas (4)-(7) to calculate designation coordinates C.

Coordinate conversion unit 122 reports the touch-panel ID of the touch panel that contains the designated coordinates, the designation coordinates, the time of occurrence of the simultaneous operations, and the event type of the simultaneous operations to pseudo-touch event generation unit 123 (hereinafter, the touch-panel ID of the touch panel in which the designated coordinates are contained, the designated coordinates, the time of occurrence of simultaneous operations, and the event type of simultaneous operations are together referred to as "conversion coordinates information"). The event type of simultaneous operations is a touch event when the touch event information is the result of simultaneous touch operations, is a drag event when the touch event information is the result of simultaneous drag operations, and is a release event when the touch event information is the result of simultaneous release operations.

Pseudo-touch event generation unit 123 receives the conversion coordinates information from coordinate conversion unit 122. Pseudo-touch event generation unit 123 then generates pseudo-touch event information for the simultaneous operations based on the conversion coordinates information that was received.

As with the touch event information, the pseudo-touch event information includes the touch-panel ID of the touch panel of the event origin, the coordinates on that touch panel, the event occurrence time, and the event type. Here, the touch-panel ID of the touch panel in which the designation coordinates are contained is designated as the touch-panel ID of the event origin touch panel, the designated coordinates are designated as the coordinates on the touch panel, the time at which the simultaneous operations occurred is designated as the event occurrence time, and the event type of the simultaneous operations is designated as the event type.

Pseudo-touch event generation unit 123 transmits the generated pseudo-touch event information to touch event processing unit 130.

Touch event processing unit 130 notifies the received touch event information to the UI component of the coordinates that were designated in the touch event information that was received from touch event judging unit 121 or the pseudo-touch event information that was received from pseudo-touch event generation unit 123.

Display control unit 140 displays the output image of the mobile information terminal on each display of display unit 200.

The processing for simultaneous operations by processing unit 100 shown in FIG. 2 is next described.

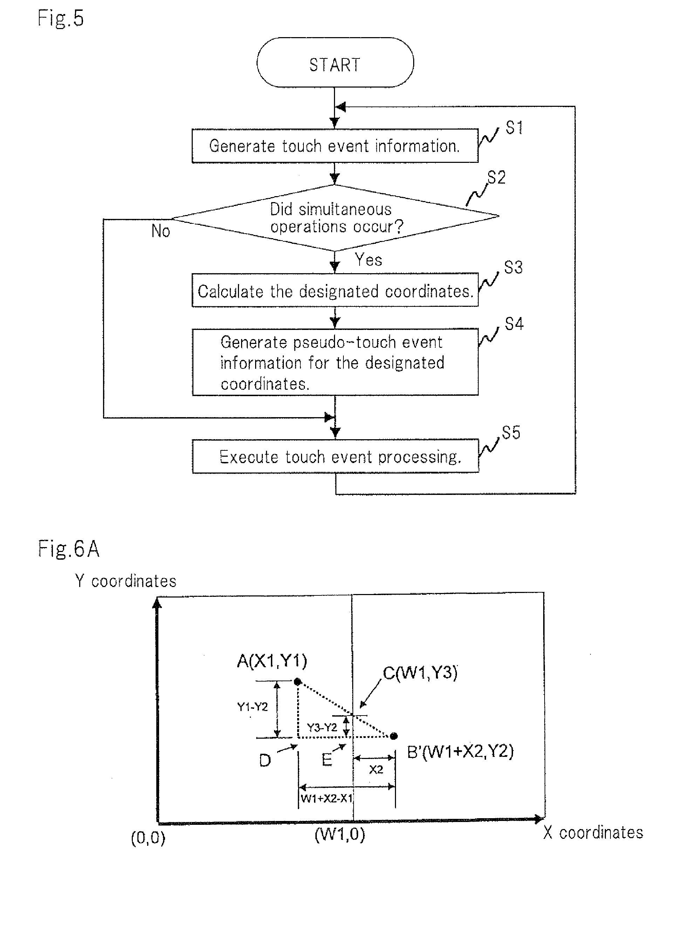

FIG. 5 is a flow chart showing the processing for simultaneous operations by processing unit 100 shown in FIG. 2.

Touch event detection unit 110 is in standby until touch information is received from each touch panel of input unit 300. Upon receiving touch information, touch event detection unit 110 generates touch event information based on the touch information that was received and reports the touch event information that was generated to touch event judging unit 121 (Step S1).

Upon receiving touch event information from touch event detection unit 110, touch event judging unit 121 judges whether the received touch event information is a result of simultaneous operations (Step S2).

If touch event judging unit 121 determines that the touch event information that was received from touch event detection unit 110 is not the result of simultaneous operations, touch event judging unit 121 transmits the received touch event information to touch event processing unit 130 and the process proceeds to Step S5.

On the other hand, if touch event judging unit 121 determines that the touch event information that was received from touch event detection unit 110 is the result of simultaneous operations, touch event judging unit 121 transmits the received touch event information to coordinate conversion unit 122.

Upon receiving the touch event information that was a result of simultaneous operations from touch event judging unit 121, coordinate conversion unit 122 calculates the designated coordinates that are designated by each operation based on the coordinates on the touch panels included in the touch event information that was received (Step S3),

When the designated coordinates that are designated by simultaneous operations are calculated, coordinate conversion unit 122 notifies the conversion coordinates information to pseudo-touch event generation unit 123.

Upon receiving the conversion coordinates information from coordinate conversion unit 122, pseudo-touch event generation unit 123 generates pseudo-touch event information for the simultaneous operations based on the conversion coordinates information that was received (Step S4).

Having generated the pseudo-touch event information for the simultaneous touch operations, pseudo-touch event generation unit 123 transmits the generated pseudo-touch event information to touch event processing unit 130.

Upon receiving the touch event information from touch event judging unit 121, touch event processing unit 130 notifies the touch event information that was received to the UI component of the coordinates that are designated by the touch event information (Step S5).

On the other hand, when the pseudo-touch event information is received from pseudo-touch event generation unit 123, touch event processing unit 130 notifies the pseudo-touch event information that was received to the UI component of the coordinates that are designated in the pseudo-touch event information (Step S5).

Upon completing the processing corresponding to the touch event information or the pseudo-touch event information, touch event processing unit 130 again proceeds to Step S1.

Although an example was shown in the present exemplary embodiment in which, when touch operations are carried out at the same time upon the touch panels on two display screens, the mobile information terminal recognizes the designation of the midpoint of the two points at which the touch operations were carried out, the present invention is not limited to this form. The point that is designated by simultaneous touch operations may be a point on the line that connects the two points at which touch operations were carried out, or for example, may be a point on the line that connects the two points, and further, a point at which the distances from the two points are at a predetermined ratio.

Although an example was shown in the present exemplary embodiment in which touch event judging unit 121 judges that simultaneous touch operations have been carried out upon detecting two touch events that occur at the same time (the difference in event occurrence times is within a predetermined time interval), the present invention is not limited to this form. For example, when touch event judging unit 121 does not sense a release event in a predetermined time interval after sensing two touch events that occur at the same time touch event judging unit 121 may judge that simultaneous touch operations have been carried out.

In addition, in the mobile information terminal in the present exemplary embodiment, an example was shown in which, when simultaneous touch operations are carried out upon touch panels on two display screens, the UI component at the midpoint of the two points at which the touch operations were carried out upon each touch panel is recognized as having been designated. Nevertheless, the present invention is not limited to this form. When simultaneous touch operations are carried out upon the touch panels on two display screens, the mobile information terminal may also recognize a UI component that is in a predetermined region between the two points at which touch operations were carried out upon each touch panel as having been designated.

Alternatively, when simultaneous touch operations are carried out upon the touch panels on two display screens, the mobile information terminal may also recognize a UI component that is in the vicinity of the line that connects the two points at which touch operations were carried out upon each touch panel as having been designated. In this case, the mobile information, terminal recognizes that the UI component that exists within a predetermined distance from the line that connects the two points as having been designated,

Alternatively, when simultaneous touch operations are carried out upon the touch panels on two display screens, the mobile information terminal may recognize the UI component that intersects with the line that connects the two points at which touch operations were carried out upon each touch panel as having been designated.

In addition, although an example was shown in the present exemplary embodiment in which display unit 200 has two display screens and input unit 300 has two touch panels, the present invention is not limited to this form, and display unit 200 may have three or more display screens, and input unit 300 may have three or more touch panels.

Although an example was shown in the present exemplary embodiment in which the input unit of the mobile information terminal is configured with each touch panel arranged on a display screen, the present invention is not limited to this form. The input unit of the mobile information terminal may be of any form that senses contact with the display screen and may be a sensor that is incorporated in the display panel and that can distinguish contact.

According to the present exemplary embodiment as described herein, when simultaneous touch operations are carried out upon touch panels on two display screens, a mobile information terminal recognizes the UI component that is in a predetermined region between the two points at which the touch operations were carried out upon each touch panel as having been designated. Accordingly, a user is able to easily designate a UI component such as an icon, button, or link to a Web page even when the UI component straddles the screen border. The ease of operation of designating a UI component on a screen border is thus improved.

In addition, when simultaneous touch operations are carried out upon the touch panels of two display screens, the mobile information terminal of the present exemplary embodiment recognizes the UI component that intersects with the line that connects the two points at which the touch operations were carried out upon the touch panels as having been designated. The user is thus able to more appropriately designate a UI component.

When simultaneous touch operations are carried out upon the touch panels on two display screens, the mobile information terminal of the present exemplary embodiment recognizes the UI component at the midpoint of the two points at which the touch operations were carried out upon the touch panels as having been designated. The user is thus able to appropriately and visually designate a UI component.

In addition, the mobile information terminal of the present exemplary embodiment implements the operations for designating a UI component on a coordinate system that is linked such that two display screens are contiguous along a border. In this way, the user is able to designate a UI component as though no physical gap existed between the two display screens.

Although simultaneous touch operations, simultaneous drag operations, and simultaneous release operations were shown as examples of the simultaneous operations upon two touch panels in the present exemplary embodiment, the present invention is not limited to these forms. The simultaneous operations upon two touch panels may be, for example, operations equivalent to double-clicks. When operations equivalent to double-clicks are carried out at the same time upon two touch panels in such cases, the mobile information terminal recognizes the UI component that is in a predetermined region between the two points at which these operations were carried out as having been double-clicked. For example, when operations equivalent to double-clicks are carried out upon two touch panels, the mobile information terminal recognizes the UI component that is at the midpoint of the two points at which the operations were carried out as having been double-clicked. A user is thus able to easily execute double-clicking upon a UI component even when the UI component straddles the screen border.

In addition, operations carried out at the same time upon two touch panels may also be, for example, drag-and-drop. In such cases, the user first simultaneously touches two points, whereupon the mobile information terminal selects the UI component in a predetermined region between the two points that are touched. The user then slides the two points while maintaining contact, whereupon the mobile information terminal moves the UI component that is selected together with the slide of the two points. Finally, the user simultaneously releases contact of the two points with the UI component at the desired position, whereupon the mobile information terminal releases selection of the UI component at that position. For example, the mobile information terminal selects the UI component at the midpoint of the two points that are being touched by the user, and moves the UI component matched to the midpoint of the two points that are undergoing sliding by the user. In this way, the user is able to easily execute a drag-and-drop operation upon the UI component even when the UI component straddles the screen border. This drag-and-drop operation can be used to copy-and-paste or to alter the displayed position of a UI component that is at the screen border.

Second Exemplary Embodiment

In the mobile information terminal in the first exemplary embodiment, examples were shown in which, when simultaneous touch operations are carried out upon the touch panels on two display screens, the UI component at the midpoint of the two points that are subjected to touch operations upon each touch panel was recognized as having been designated.

However, the present invention is not limited to this form. For example, a UI component that straddles the screen border can be more appropriately designated by taking as the object of control the UI component that is at the intersection of the screen border and the line that connects the two points that are subjected to the touch operations. Thus, in the second exemplary embodiment, an example is described in which, when simultaneous touch operations are implemented upon touch panels on two display screens, a UI component that is on the intersection of the screen border and the line that joins the two points subjected to touch operations upon each touch panel is recognized as having been designated.

The basic configuration of the mobile information terminal of the second exemplary embodiment is the same as the configuration of the mobile information terminal of the first exemplary embodiment.

However, when the touch event information is the result of simultaneous touch operations, coordinate conversion unit 122 of the second exemplary embodiment takes as the designated coordinates the coordinates of the intersection between the screen border and the line that joins the coordinates on each touch panel that are included in the two items of touch event information that are generated on the two touch panels and that are received from touch event judging unit 121.

An example is next described of the calculation of the intersection between the screen border and the line that joins the two point that are subjected to simultaneous touch operations in touch panels 310 and 320 shown in FIG. 3.

In touch panels 310 and 320 shown in FIG. 3, point A at the coordinates $(X1, Y1)$ of touch panel 310 and point B at coordinates $(X2, Y2)$ of touch panel 320 are touched at the same time.

FIG. 6A shows points on touch panels 310 and 320 represented by the coordinate system of touch panel 310. Although in actuality a physical gap typically exists between touch panel 310 and touch panel 320, in the coordinate system that includes two touch panels 310 and 320, touch panel 310 and touch panel 320 are treated as being contiguous at the border. In FIG. 6A, the borderline at the left edge of touch panel 320 is treated as being contiguous with the borderline of the right edge of touch panel 310, and point B on touch panel 320 is converted to the coordinate system of touch panel 310.

The coordinates $(X2, Y2)$ of point B are converted to point B' $(W1 + X2, Y2)$ in the coordinate system of touch panel 310.

Assuming that the intersection of line AB' and line $X = W1$ is C $(W1, Y3)$, Formula (8) is derived from the ratio of similitude between the right triangle represented by the three points point B', point A, and point D that is represented by coordinates $(X1, Y2)$ and the right triangle represented by the three points point B', point C, and point E that is represented by coordinates $(W1, Y2)$.

$$Y1 - Y2 : Y3 - Y2 = W1 + X2 - X1 : X2 \qquad (8)$$

By solving Formula (8), the Y coordinate Y3 of intersection point C is expressed by Formula (9).

$$Y3 = (W1 \times Y2 - 2 - X1 \times Y2 + X2 \times Y1) / (W1 - X1 + X2) \qquad (9)$$

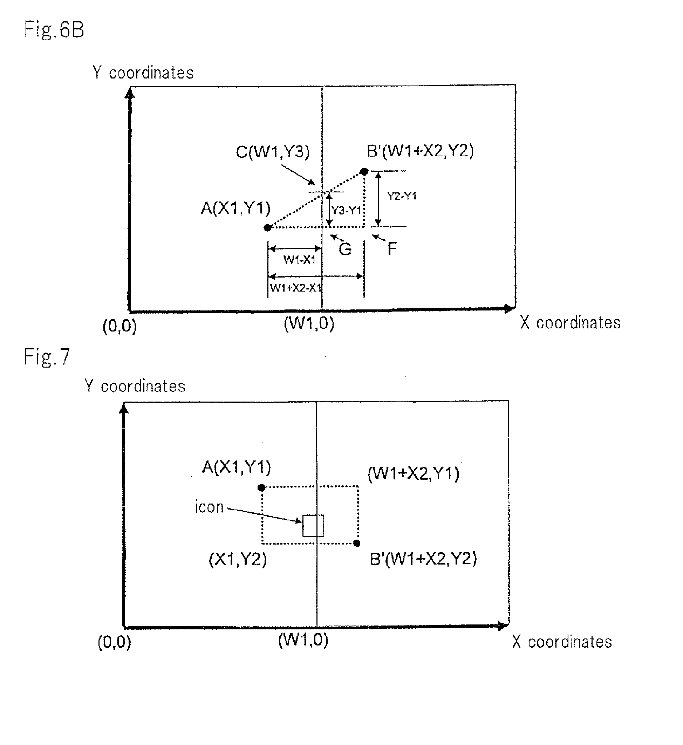

In addiction, FIG. 6B shows a diagram in which points on touch panels 310 and 320 are represented by the coordinate system of touch panel 310 when the Y coordinate Y2 of point B' has a value greater than the Y coordinate Y1 of point A.

Assuming that the intersection of line AB' and line $X = W1$ is C $(W1, Y3)$, Formula (10) is derived by the ratio of similitude between the right triangle represented by the three points point A, point B', and point F that is represented by coordinates $(W1 + X2, Y1)$ and the right triangle represented by the three points point A, point C, and point G that is represented by coordinates $(W1, Y1)$.

$$Y2 - Y1 : Y3 - Y1 = W1 + X2 - X1 : W1 - X1 \qquad (10)$$

It can be seen that by solving Formula (10), the Y coordinate Y3 of intersection point C is expressed by Formula (9) when the Y coordinate Y2 of point B' has a value greater than the Y coordinate Y1 of point A.

Coordinate conversion unit 122 uses Formula (9) to calculate Y3 and reports the conversion coordinates information in which the point of coordinates (0, Y3) on touch panel 320 is the designated coordinates to pseudo-touch event generation unit 123.

Thus, when touch operations are carried out at the same time upon touch panels on two display screens, touch event processing unit 130 of the second exemplary embodiment notifies touch event information to the UI component that is at the intersection of the screen border and the line that connects the two points that are subjected to the touch operations upon each touch panel.

As described above, according to the present exemplary embodiment, when simultaneous touch operations are carried out upon the touch panels on two display screens, the mobile information terminal recognizes the UI component that is at the intersection of the screen border and the line that connects the two points at which touch operations were carried out upon the touch panels as having been designated. In this way, the mobile information terminal is able to more accurately designate a UI component that straddles the screen border even when a divergence occurs in the touch operations by the user.

Third Exemplary Embodiment

In the first and second exemplary embodiment, examples were described in which, when simultaneous touch operations are carried out upon touch panels on two display screens in a mobile information terminal, a UI component that is on the line that connects the two points that were subjected to the touch operations upon each touch panel is recognized as having been designated.

Nevertheless, the present invention is not limited to this form. For example, a UI component that straddles a screen border can be more appropriately designated by taking as the object of control a UI component that intersects a predetermine region determined by the two points that are subjected to the touch operations. In the third exemplary embodiment, an example is described in which, when touch operations are carried out at the same time upon touch panels on two display screens, a UI component that intersects with a predetermined region that is determined by the touch operations carried out upon each touch panel is recognized as having been designated.

The basic configuration of the mobile information terminal of the third exemplary embodiment is the same as the configuration of the mobile information terminal of the first exemplary embodiment.

However, when coordinate conversion unit 122 receives two items of touch event information that is a result of simultaneous touch operations from touch event judging unit 121, coordinate conversion unit 122 of the third exemplary embodiment takes as the designated coordinates the center coordinates of the UI component that intersects a rectangular region that takes as apices of opposite angles the coordinates on each touch panel that are included in the two items of touch event information.

An example is next described regarding the calculation of the intersection of a screen border and the line that connects two points that are subjected to simultaneous touch operations in touch panels 310 and 320 shown in FIG. 3.

In touch panels 310 and 320 shown in FIG. 3, point A at coordinates (X1, Y1) of touch panel 310 and point B at coordinates (X2, Y2) of touch panel 320 are touched at the same time.

FIG. 7 shows the points on touch panels 310 and 320 in the coordinate system of touch panel 310. Although in actuality a physical gap typically exists between touch panel 310 and touch panel 320, in the coordinate system that includes two touch panels 310 and 320, touch panel 310 and touch panel 320 are treated as being contiguous at the border. In FIG. 7, the borderline of the left edge of touch panel 320 is assumed to be contiguous with the borderline of the right edge of touch panel 310, and point B on touch panel 320 is converted to the coordinate system of touch panel 310.

The coordinates (X2, Y2) of point B are converted to point B' (W1+X2, Y2) in the coordinate system of touch panel 310.

At this time, coordinate conversion unit 122 searches for a UI component that intersects the rectangular region enclosed by the four points of coordinates (X1, Y1), (X1, Y2), (W1+X2, Y1) and (W1+X2, Y2) in the coordinate system of touch panel 310. Upon detecting a UI component that intersects with the rectangular region, coordinate conversion unit 122 reports to pseudo-touch event generation unit 123 the conversion coordinates information that takes the center coordinates of the UI component as the designated coordinates.

Thus, when simultaneous touch operations are carried out, touch event processing unit 130 is able to notify touch event information to the UI component that intersects the rectangular region that takes, as apices of opposite angles, the two points that were subjected to the touch operations upon each touch panel.

When a UI component that intersects the rectangular region does not exist, coordinate conversion unit 122 discards the touch event information that was received from touch event judging unit 121 without notifying the conversion coordinates information to pseudo-touch event generation unit 123.

Alternatively, when there is a plurality of UI components that intersect the rectangular region, coordinate conversion unit 122 discards the touch event information that was received from touch event judging unit 121 without notifying the conversion coordinates information to pseudo-touch event generation unit 123. When the mobile information terminal operates in this manner, error operations in which a user unintentionally carries out touch operations that designate a plurality of UI components can be prevented.

Alternatively, when there is a plurality of UI components that intersect the rectangular region, coordinate conversion unit 122 may notify to pseudo-touch event generation unit 123 conversion coordinates information that takes, as the designated coordinates, the center coordinates of each UI component for each UI component that is present in the rectangular region. When the mobile information terminal operates in this manner, the user is able to simultaneously designate a plurality of UI components as a group.

According to the present exemplary embodiment as described above, when simultaneous touch operations are carried out, the mobile information terminal recognizes a UI component that intersects a predetermined region that is determined by the two points that were subjected to the touch operations as having been designated. The mobile information terminal is thus able to designate a desired UI component even when a certain amount of divergence occurs in the touching by the user for designating the UI component, whereby the ease of operation can be improved.

In addition, when a drag-and-drop operation is carried out by the user, the mobile information terminal of the present exemplary embodiment may cause movement of, not only a UI component, but also the entire region that is designated by the simultaneous touch operation.

Fourth Exemplary Embodiment

In the first to third exemplary embodiments, examples were shown in which the mobile information terminal designated a UI component when simultaneous touch operations were carried out, but the present invention is not limited to this form. For example, the ease of operation can be improved if the mobile information terminal displays a cursor such as an arrow for showing the object of operation when simultaneous touch operations are carried out. An example is next described in which, in the fourth exemplary embodiment, the mobile information terminal displays a cursor when simultaneous touch operations are carried out.

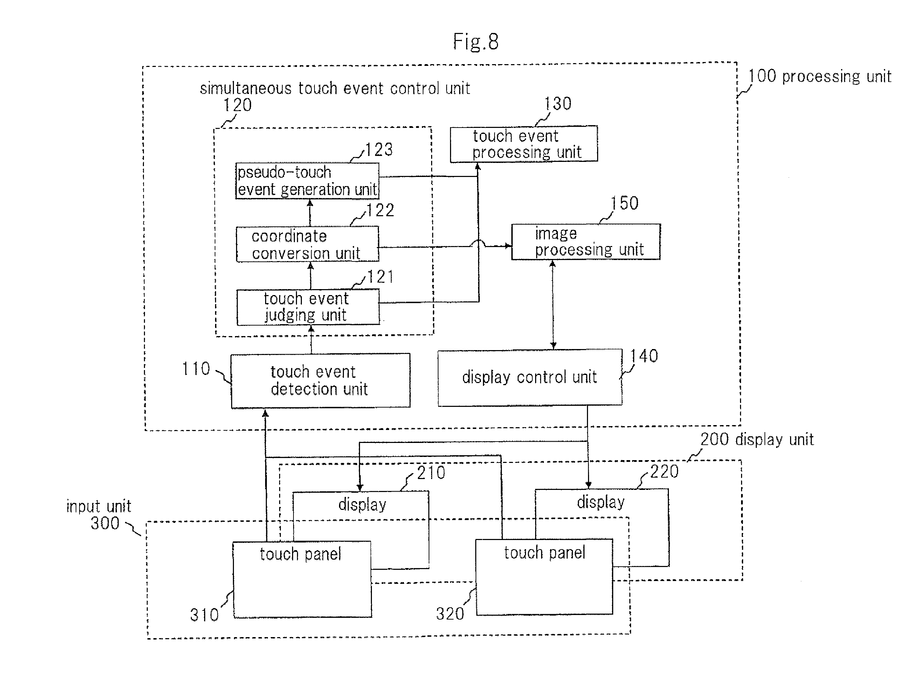

FIG. 8 is a block diagram showing the configuration of the mobile information terminal in the fourth exemplary embodiment.

As shown in FIG. 8, the basic configuration of the mobile information terminal of the fourth exemplary embodiment is the same as the configuration of the mobile information terminal of the first exemplary embodiment. However, processing unit 100 of the mobile information terminal of the fourth exemplary embodiment includes image processing unit 150.

Upon being requested from coordinate conversion unit 122 to display or move a cursor to designated coordinates, image processing unit 150 depicts a cursor at the designated coordinates of the image that is currently displayed and supplies the result to display control unit 140.

In addition, upon receiving two items of touch event information resulting from simultaneous touch operations from touch event judging unit 121, coordinate conversion unit 122 of the fourth exemplary embodiment calculates the designated coordinates that display a cursor from the two items of touch event information. Coordinate conversion unit 122 then requests image processing unit 150 to display the cursor at the designated coordinates that were calculated. At this time, coordinate conversion unit 122 discards the touch event information that was received from touch event judging unit 121 without notifying the conversion coordinates information to pseudo-touch event generation unit 123.

In addition, upon receiving two items of touch event information that result from simultaneous drag operation from touch event judging unit 121 when a cursor is being displayed, coordinate conversion unit 122 calculates the designated coordinates for moving the cursor from the two items of touch event information. Coordinate conversion unit 122 then requests image processing unit 150 to move the cursor to the designated coordinates that were calculated. At this time, coordinate conversion unit 122 discards the touch event information that was received from touch event judging unit 121 without notifying the conversion coordinates information to pseudo-touch event generation unit 123.

Upon receiving two items of touch event information that result from simultaneous release operations from touch event judging unit 121 when a cursor is being displayed, coordinate conversion unit 122 calculates the designated coordinates from the two items of touch event information. Coordinate conversion unit 122 then generates conversion coordinates information that indicates that a touch event has occurred at the designated coordinates that were calculated and notifies the conversion coordinates information to pseudo-touch event generation unit 123.

The relation between the display of a mobile information terminal and the operations of a user when the midpoint of two points subjected to simultaneous touch operations is taken as the designated coordinates is next described. The user first touches two points at the same time, whereupon the mobile information terminal displays a cursor at the midpoint of the two points that were touched. The user next slides the two points while maintaining contact, whereupon the mobile information terminal causes the cursor to move so as to match the midpoint of the two points. Finally, the user simultaneously releases contact with the two points when the cursor is at the position indicating the desired UI component, whereupon the mobile information terminal designates the UI component.

As described above, according to the present exemplary embodiment, when simultaneous touch operations are carried out, the mobile information terminal displays a cursor. The user is thus able to carry out operations while visually checking, by means of the cursor, the point that is designated by the simultaneous touch operations.

In addition, when a UI component is present at the designated coordinates at which a cursor is displayed, coordinate conversion unit 122 of the present exemplary embodiment may display the UI component such that the UI component can be distinguished from other components. In this way, the user is able to easily check a UI component that he is designating even when the cursor straddles the screen border and is thus difficult to see.

Fifth Exemplary Embodiment

In the fifth exemplary embodiment, in order to reduce the difficulty of viewing at a screen border, the mobile information terminal copies and displays a portion of the image that is displayed straddling the screen border on either of the two display screens in an initial touch operation, and then designates a UI component that was copied and displayed in the next touch operation.

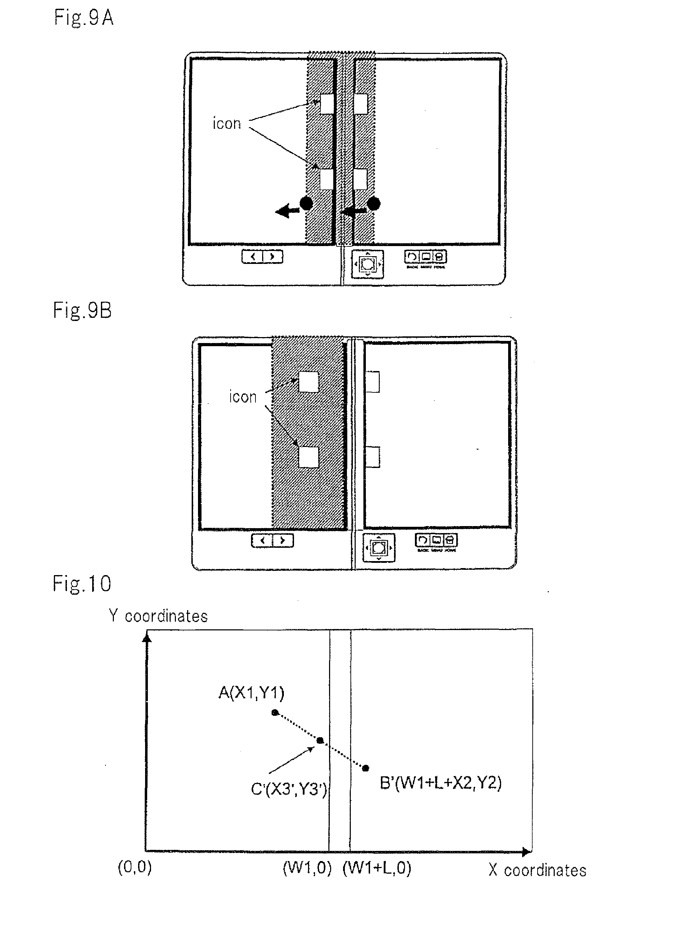

FIG. 9A is an example of the display of an image in a mobile information terminal having two display screens arranged horizontally. In the example shown in FIG. 9A, icons that are displayed at the gap of the two display screens are thus split and difficult to see. If the two black dots shown FIG. 9A are simultaneously touched by the user and the two simultaneously touched dots then slid leftward, the mobile information terminal copies and displays a predetermined region that straddles the screen border (the diagonally hatched portion shown in FIG. 9A) on the display screen on the left side. FIG. 9B is an example of the display of an image when the predetermined region is copied and displayed on the mobile information terminal that was shown in FIG. 9A. As shown in FIG. 9B, only the diagonally hatched portion shown in FIG. 9A is copied and displayed on the display screen on the left side.

By moving the cursor that indicates the object of operation based on further movement of the two touched points that have been slid leftward in this state of copy and display, the ease of operation can be improved.

The basic configuration of the mobile information terminal of the fifth exemplary embodiment is the same as the configuration of the mobile information terminal of the first exemplary embodiment.

However, upon receiving two items of touch event information that result from simultaneous touch operations from touch event judging unit 121 and then receiving two items of touch event information resulting from a simultaneous drag operation, coordinate conversion unit 122 of the fifth exemplary embodiment issues a request to image processing unit 150 to copy and display. Coordinate conversion unit 122 further calculates the designated coordinates for displaying a cursor based on the touch event information that was received from touch event judging unit 121. Coordinate conversion unit 122 then requests image processing unit 150 to display the cursor at the designated coordinates that were calculated. At this time, coordinate conversion unit 122 discards the touch event information that was received from touch event judging unit 121 without notifying the conversion coordinates information to pseudo-touch event generation unit 123.

Upon being requested by coordinate conversion unit 122 to copy and display, image processing unit 150 determines the region that is the origin for copy and display (hereinafter referred to as the copy-origin region) and the destination region for copy and display (hereinafter referred to as the copy-destination region). Image processing unit 150 first obtains from display control unit 140 the image that is currently being displayed on display 210 and display 220. Image processing unit 150 then copies, of the images that were obtained, the image of the copy-origin region to the copy-destination region and supplies the result to display control unit 140.

In addition, when image processing unit 150 is requested from coordinate conversion unit 122 to display a cursor at the designated coordinates when copying and displaying, image processing unit 150 depicts a cursor at the designated coordinates of the image that is being copied and displayed and supplies the result to display control unit 140. When the designated coordinates indicate the copy-origin region, image processing unit 150 depicts a cursor at the coordinates of the copy-destination region that corresponds to the designated coordinates. When the designated coordinates indicate the copy-origin region, image processing unit 150 may simply depict a cursor at the designated coordinates. The option of whether to simply depict a cursor at the designated coordinates or depict a cursor at the coordinates of the copy-destination region that corresponds to the designated coordinates can be set in advance in the mobile information terminal.

Alternatively, upon receiving two items of touch event information that result from simultaneous drag operations from touch event judging unit 121 when copying and displaying, coordinate conversion unit 122 calculates the designated coordinates of moving the cursor based on the two items of touch event information. Coordinate conversion unit 122 then requests image processing unit 150 to move the cursor to the designated coordinates that were calculated. At this time, coordinate conversion unit 122 discards the touch event information that was received from touch event judging unit 121 without notifying the conversion coordinates information to pseudo-touch event generation unit 123.

Upon being requested from coordinate conversion unit 122 to move the cursor to the designated coordinates when copying and displaying, image processing unit 150 depicts the cursor at the designated coordinates of the image that is being copied and displayed and supplies the result to display control unit 140.

Alternatively, upon receiving two items of touch event information resulting from a simultaneous release operation from touch event judging unit 121 at the time of copying and displaying, coordinate conversion unit 122 calculates the designated coordinates based on the two items of touch event information. Coordinate conversion unit 122 then generates conversion coordinates information that indicates that a touch event has occurred at the designated coordinates that were calculated and notifies the information to pseudo-touch event generation unit 123.

Upon receiving touch event information from touch event judging unit 121 or upon receiving pseudo-touch event information from pseudo-touch event generation unit 123, touch event processing unit 130 of the fifth exemplary embodiment judges whether copying and displaying are currently in effect. If in a state of copying and displaying, touch event processing unit 130 converts the coordinates on the touch panel that are included in the touch event information or pseudo-touch event information that was received to the coordinates in the copy-origin region. Touch event processing unit 130 then notifies the touch event information in which the coordinates have been converted to the application that manages the UI component that is designated in the touch event information.

When a predetermined touch operation for ending copying and displaying is implemented by the user at the time of copying and displaying, coordinate conversion unit 122 requests image processing unit 150 to terminate copying and displaying.

Upon being requested by coordinate conversion unit 122 to terminate copying and displaying, image processing unit 150 supplies the image that was being displayed before copying and displaying to display control unit 140.

According to the present exemplary embodiment as described above, a mobile information terminal copies and displays the display of a predetermined portion that straddles the screen border to either of two display screens and allows the user to designate a UI component on the copied and displayed display screen. The user is thus able to operate the mobile information terminal while visually confirming by means of a cursor the UI components that are being copied and displayed.

Sixth Exemplary Embodiment

In the fifth exemplary embodiment, an example was described in which, when a simultaneous drag operation is carried out at the time of copying and displaying, the designation of a UI component that is being copied and displayed is facilitated by moving a cursor. However, the present invention is not limited to this form. For example, a mobile information terminal may, while copying and displaying, successively display UI components one by one that are being copied and displayed and designate a UI component at the timing that the simultaneous release operation is carried out. In the sixth exemplary embodiment, an example is described in which, when simultaneous touch operations are being continued at the time of copying and displaying, UI components that are being copied and displayed are displayed one at a time in order.

The basic configuration of the mobile information terminal of the sixth exemplary embodiment is the same as the configuration of the mobile information terminal of the fifth exemplary embodiment.

However, coordinate conversion unit 122 of the sixth exemplary embodiment requests image processing unit 150 to successively display one at a time UI components that are being copied and displayed while simultaneous touch operations are continued at the time of copying and displaying.

Upon being requested from coordinate conversion unit 122 to successively display one by one UI components that are being copied and displayed, image processing unit 150 successively supplies to display control unit 140 images that depict one at a time the UI components that are in the copy-destination region.

Upon receiving two items of touch event information that result from simultaneous release operations from touch event judging unit 121 at the time of copying and displaying, coordinate conversion unit 122 calculates the center coordinates of the UI components that are being displayed at that timing. Coordinate conversion unit 122 then generates conversion coordinates information that indicates that a touch event has occurred at the coordinates that were calculated and provides notification to pseudo-touch event generation unit 123. Coordinate conversion unit 122 next terminates the successive one-by-one display of the UI components that are being copied and displayed and requests image processing unit 150 to effect display as a group as usual.

According to the present exemplary embodiment as described above, when simultaneous touch operations are continued at the time of copying and displaying the display of a predetermined portion that straddles the screen border on either of two display screens, the mobile information terminal successively displays one-by-one the UI components that are being copied and displayed. At this time, the user is able to designate the UI component at the timing of carrying out a simultaneous release operation. The mobile information terminal is thus able to improve ease of operation.

Seventh Exemplary Embodiment

In the first to third exemplary embodiments, examples were described in which operations for designating UI components were carried out in a linked coordinate system such that touch panel 310 and touch panel 320 are contiguous at the border, but in actuality, a physical gap typically exists between touch panel 310 and touch panel 320. As a result, a line that joins two points, a point on touch panel 310 and a point on touch panel 320, sometimes does not match between cases in which the line joins two points in a coordinate system in which the two touch panels are contiguous and cases in which two points that a user actually sees are joined by a physical line.

In the present exemplary embodiment, an example is described in which, taking into consideration the physical gap that exists between touch panel 310 and touch panel 320, a UI component is designated that is on a line that physically connects two points that are touched by the user. In the present exemplary embodiment, operations for designating a UI component are carried out in a coordinate system in which the coordinates on touch panel 310 and the coordinates on touch panel 320 are arranged so that they are physically positioned on touch panel 310 and touch panel 320.

It is assumed that in touch panels 310 and 320, point A at coordinates (X1, Y1) of touch panel 310 and point B at coordinates (X2, Y2) of touch panel 320 are touched at the same time.

An example is first described in which the coordinates of the midpoint of the two points A and B are taken as the designated coordinates on the coordinate system of the present exemplary embodiment.

FIG. 10 shows a diagram for describing an example in which the coordinates of the midpoint of two points A and B on the coordinate system of the present exemplary embodiment are taken as the designated coordinates. In the example shown in FIG. 10, a gap that is equivalent to L pixels of the touch panels is assumed to exist between the borderline of the right edge of touch panel 310 and the borderline of the left edge of touch panel 320. The borderline of the right edge of touch panel 310 is assumed to contact the borderline of the left edge of the gap between the two touch panels, and the borderline of the left edge of touch panel 320 is assumed to contact the borderline of the right edge of the gap between the two touch panels.

The coordinates (X2, Y2) of point B are converted to point B' (W1 + L + X2, Y2) in the coordinate system in which the coordinates on touch panel 310 and the coordinates on touch panel 320 are arranged in the physical positional relation of touch panel 310 and touch panel 320.

At this time, the X3' of midpoint C' (X3', Y3') of point A and point B' is expressed by Formula (11) and Y3' of midpoint C' (X3', Y3') is expressed by Formula (12).

$$X3' = (X1 + L + W1 + X2) / 2 \qquad (11)$$

$$Y3' = (Y1 + Y2) / 2 \qquad (12)$$

Here, when Formula (13) holds, midpoint C' is present on touch panel 310.

$$X3' < W1 \qquad (13)$$

On the other hand, when Formula (14) holds, midpoint C1' is present on touch panel 320.

$$W1 + L \leq X3' \qquad (14)$$

In addition, when Formula (15) holds, midpoint C' is present in the gap between touch panel 310 and touch panel 320.

$$W1 \leq X3' < W1 + L \qquad (15)$$

When Formula (13) holds, midpoint C' is present on touch panel 310 and, assuming that the designated coordinates on touch panel 310 are C (X3, Y3), X3 is expressed by Formula (16) and Y3 is expressed by Formula (17).

$$X3 = (X1 + L + W1 + X2) / 2 \qquad (16)$$

$$Y3 = (Y1 + Y2) / 2 \qquad (17)$$

On the other hand, when Formula (14) holds, midpoint C' is present on touch panel 320, and when the designated coordinates on touch panel 320 are C (X3, Y3), X3 is expressed by Formula (18) and Y3 is expressed by Formula (19).
$$X3 = (X1 + L + W1 + X2) / 2 - (W1 + L) \qquad (18)$$

$$Y3 = (Y1 + Y2) / 2 \qquad (19)$$

When Formula (15) holds, midpoint C' is present in the gap between touch panel 310 and touch panel 320. In this case, the point on the touch panel that is closest to midpoint C' is taken as the designated coordinates. In other words, when Formula (20) holds, a point on touch panel 310 becomes the designated coordinates. If the designated coordinates on touch panel 310 are assumed to be C (X3, Y3), X3 is expressed by Formula (21) and Y3 is expressed by Formula (22).
$$X3' < W1 + L / 2 \qquad (20)$$

$$X3 = W1 - 1 \qquad (21)$$

$$Y3 = (Y1 + Y2) / 2 \qquad (22)$$

On the other hand, when Formula (20) does not hold, a point on touch panel 320 becomes the designated coordinates. If the designated coordinates on touch panel 320 are assumed to be C (X3, Y3), then X3 is expressed by Formula (23) and Y3 is expressed by Formula (24).
$$X3 = 0 \qquad (23)$$

$$Y3 = (Y1 + Y2) / 2 \qquad (24)$$

An example is next described in which the coordinates at the intersection of the screen border and line AB on the coordinate system of the present exemplary embodiment are assumed to be the designated coordinates.

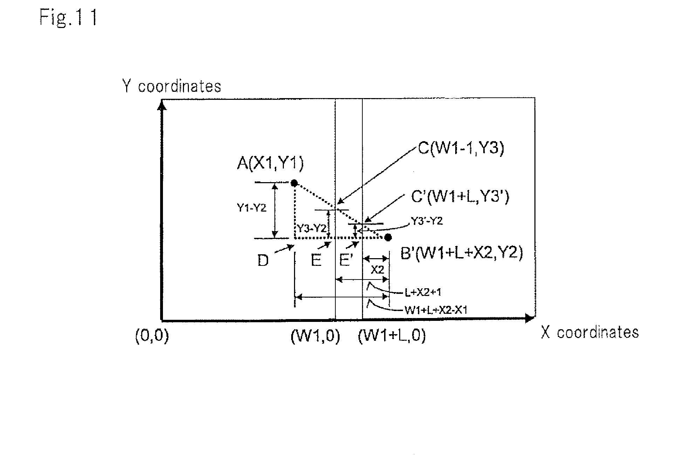

FIG. 11 shows a diagram for explaining an example in which coordinates at the intersection of the screen border and line AB in the coordinate system of the present exemplary embodiment are taken as the designated coordinates, In the example shown in FIG. 11, as in the example shown in FIG. 10, a gap equivalent to L pixels is assumed to be present between the borderline of the right edge of touch panel 310 and the borderline of the left edge of touch panel 320. The borderline of the right edge of touch panel 310 is assumed to contact the borderline of the left edge of the gap between the two touch panels, and the borderline of the left edge of touch panel 320 is assumed to contact the borderline of the right edge of the gap between the two touch panels.

In a coordinate system in which coordinates on touch panel 310 and coordinates on touch panel 320 are arranged in the physical positional relation of touch panel 310 and touch panel 320, the location of the intersection of the line AB and the borderline of the left edge of touch panel 320 sometimes greatly differs from the location of the intersection of the line AB and the borderline of the right edge of touch panel 310. When calculating the designated coordinates in the coordinate system of the present exemplary embodiment, it is assumed that the intersection of line AB and the borderline of the left edge of touch panel 320 and the intersection of line AB and the borderline of the right edge of touch panel 310 are designated at the same time.

The coordinates (X2, Y2) of point B are converted to point B' (W1 + L + X2, Y2) in the coordinate system in which the coordinates on touch panel 310 and the coordinates on touch panel 320 are arranged in the physical positional relation of touch panel 310 and touch panel 320.

The intersection of line AB' and the borderline of the left edge of touch panel 320 is first calculated.

If the intersection of line AB' and line X = W1 + L that indicates the borderline of the left edge of touch panel 320 is assumed to be C' (W1 + L, Y3'), then Formula (25) holds based on the ratio of similitude of the right triangle that is represented by the three points point B', point A, and point D that is represented by coordinate (X1, Y2) and the right triangle that is represented by the three points point B', point C', and point E' that is represented by coordinates (W1 + L, Y2).

$$Y1 - Y2 : Y3' - Y2 = W1 + L + X2 - X1 : X2 \qquad (25)$$

By solving Formula (25), Y3' can be calculated, and the intersection of line AB' and the borderline of the left edge of touch panel 320 can be calculated.

The intersection of line AB' and the borderline of the right edge of touch panel 310 is next calculated.

If the intersection of line AB' and line X = W1 - 1 that indicates the borderline of the right edge of touch panel 310 is assumed to be C(W1 - 1, Y3), then Formula (26) holds based on the ratio of similitude between the right triangle that is represented by the three points point B', point A, and point D that is represented by coordinates (X1, Y2) and the right triangle that is represented by the three points point B', point C, and point E that is represented by the coordinates (W1 - 1, Y2).

$$Y1 - Y2 : Y3 - Y2 = W1 + L + X2 - X1 : L + X2 + 1 \qquad (26)$$

By solving Formula (26), Y3 can be calculated, and the intersection of line AB' and the borderline of the right edge of touch panel 310 can be calculated.

As described above, the mobile information terminal of the present exemplary embodiment carries out operations for designating a UI component in a coordinate system in which the coordinates on touch panel 310 and the coordinates on touch panel 320 are arranged in the physical positional relation of touch panel 310 and touch panel 320. Thus, by designating a physical straight line that straddles the physical gap that exists between the two touch panels, the user is able to designate a UI component on the line, and can therefore more easily implement visual designation of the UI component.

The method that is carried out on the mobile information terminal of the present invention may also be applied to a program for bringing about execution by a computer, This program can also be stored on a storage medium and can be provided to the outside by way of a network.

Although the invention of the present application has been described above with reference to exemplary embodiments, the present invention is not limited to the above-described exemplary embodiments. The configuration and details of the invention of the present application are open to various modifications within the scope of the invention of the present application that will be clear to one of ordinary skill in the art.

This application claims the benefits of priority based on Japanese Patent Application No. 2009-248066 for which application was submitted on October 28, 2009 and incorporates by citation all of the disclosures of that application.

**Claims**

1. A mobile information terminal comprising:

a display unit having two or more display screens;
a touch panel input unit that senses contact with each of said display screens; and
a processing unit that, when a predetermined touch operation is carried out upon the two adjacent display screens, recognizes that a component in a predetermined region between two points, that were touched in said predetermined touch operation that was carried out upon the two adjacent display screens, has been designated.

2. The mobile information terminal according to claim 1, wherein said processing unit, when said predetermined touch operation is carried out, recognizes that a component, that intersects a line that connects the two points that were touched in said predetermined touch operation, has been designated.

3. The mobile information terminal according to claim 2, wherein said processing unit, when said predetermined touch operation is carried out, recognizes that a component, that is at the midpoint of the two points that were touched in said predetermined touch operation, has been designated.

4. The mobile information terminal according to claim 2, wherein said processing unit, when said predetermined touch operations are carried out, recognizes that a component that is at the intersection of the border of the two display screens and a line that connects the two points that were touched in said predetermined touch operation has been designated.

5. The mobile information terminal according to any one of claims 2 to 4, wherein said line that connects the two points is a line on a coordinate system in which said two display screens are linked such that they are contiguous at their borders.

6. The mobile information terminal according to any one of claims 2 to 4, wherein said line that joins the two points is a line on a coordinate system in which the coordinates on said two display screens are arranged so that they are physically positioned on each of the two display screens.

7. The mobile information terminal according to any one of claims 1 to 6, wherein said predetermined touch operation is a simultaneous touch operation that is carried out upon said two display screens.

8. The mobile information terminal according to any one of claims 1 to 6, wherein said predetermined touch operation is an operation of double-clicking on said two display screens at the same time.

9. The mobile information terminal according to any one of claims 1 to 6, wherein said processing unit, when two points that are touched by said predetermined touch operation are moved while still being touched, causes the component that was designated by said predetermined touch operation to move in accordance with the movement of the two points, and when the operation of touching the two points is released, causes the selection of the component to be canceled at the position at which the component is being displayed at that time.

10. A processing method that is applied in a mobile information terminal that has two or more display screens and touch-panel input means that senses contact with each of the display screens, the processing method comprising steps of:

detecting a predetermined touch operation that is carried out upon two adj acent display screens; and
recognizing a component in a predetermined region between two points that were touched that were touched in the predetermined touch operation that was carried out upon said two display screens as being designated.

11. The processing method according to claim 10, further comprising a step of, when said predetermined touch operation is detected, recognizing a component that intersects a line that connects two points that were touched in the predetermined touch operation as being designated.

12. The processing method according to claim 11, further comprising a step of, when said predetermined touch operation is detected, recognizing a component that is at the midpoint of two points that were touched in said predetermined touch operation as being designated.

**13.** The processing method according to claim 11, further comprising a step of, when said predetermined touch operation is detected, recognizing a component, that is at the intersection of a border of two display screens and a line that connects two points that were touched in the predetermined touch operation, as being designated.

**14.** The processing method according to any one of claims 10 to 13, wherein said line that connects two points is a line on a coordinate system in which said two display screens are linked such that they are contiguous at their border.

**15.** The processing method according to any one of claims 10 to 13, wherein said line that connects the two points is a line in a coordinate system in which the coordinates of said two display screens are arranged so that they are physically positioned on each of the two display screens.

**16.** The processing method according to any one of claims 10 to 15, wherein said predetermined touch operation is a simultaneous touch operation that is carried out upon said two display screens.

**17.** The processing method according to any one of claims 10 to 15, wherein said predetermined touch operation is an operation of double-clicking on said two display screens at the same time.

**18.** The processing method according to any one of claims 10 to 15, wherein, when two points that were touched in said predetermined touch operation are moved while still being touched, a component that was designated in said predetermined touch operation is caused to move in accordance with the movement of the two points, and when the operation of touching the two points is released, selection of the component is canceled at the position at which the component is displayed at that time.

**19.** A program for causing a computer to execute processes of:

detecting a predetermined touch operation that is carried out upon two adjacent display screens of a mobile information terminal that has two or more display screens and a touch-panel input means that senses contact with each of said display screens; and
recognizing a component in a predetermined region between two points that were touched in the predetermined touch operation that was carried out upon said two display screens as being designated.

**20.** The program according to claim 19, wherein, when said predetermined touch operation is detected, a component that intersects a line that joins two points that were touched in the predetermined touch operation is recognized as being designated.

**21.** The program according to claim 20, wherein, when said predetermined touch operation is detected, a component that is at the midpoint of two points that were touched in the predetermined touch operation is recognized as being designated.

**22.** The program according to claim 20, wherein, when said predetermined touch operation is detected, a component that is at the intersection of a border of two display screens and a line that joins two points that were touched in the predetermined touch operation is recognized as being designated.

**23.** The program according to any one of claims 20 to 22, wherein said line that joins two points is a line on a coordinate system in which said two display screens are linked such that they are contiguous at their border.

**24.** The program according to any one of claims 20 to 22, wherein said line that joins two points is a line on a coordinate system in which coordinates on said two display screens are arranged so that they are physically positioned on each of e two display screens.

**25.** The program according to any one of claims 19 to 24, wherein said predetermined touch operation is a simultaneous touch operation that is carried out upon said two display screens.

**26.** The program according to any one of claims 19 to 24, wherein said predetermined touch operation is an operation of double-clicking on said two display screens at the same time.

**27.** The program according to any one of claims 19 to 24, wherein, when two points that are touched in said predetermined touch operation are moved while still being touched, said component that was designated in said predetermined touch operation is caused to move in accordance with the movement of the two points, and when the operation of touching the two points is released, selection of the component is canceled at the position at which the component is displayed at that time.

Fig.1

icon

Fig.2

EP 2 495 638 A1

Fig.3

touch panel 310                    touch panel 320

Y coordinates                      Y coordinates

H                                  H

A(X1,Y1)
●

B(X2,Y2)
●

(0,0)        X coordinates    (0,0)        X coordinates

W1                                 W2

Fig.4

Y coordinates

A(X1,Y1)
●

●
C'(X3',Y3')

●
B'(W1+X2,Y2)

(0,0)              (W1,0)                    X coordinates

Fig.5

```
        ┌─────────────┐
        │    START    │
        └─────────────┘
               │
               ▼
  ┌──────────────────────────────────┐  S1
  │ Generate touch event information. │
  └──────────────────────────────────┘
               │
               ▼                        S2
          ╱─────────────╲
   No    ╱ Did simultaneous ╲
  ◄─────╱  operations occur? ╲
         ╲                   ╱
          ╲─────────────────╱
               │ Yes
               ▼                        S3
  ┌──────────────────────────────────┐
  │ Calculate the designated coordinates. │
  └──────────────────────────────────┘
               │
               ▼                        S4
  ┌──────────────────────────────────┐
  │ Generate pseudo-touch event       │
  │ information for the designated     │
  │ coordinates.                       │
  └──────────────────────────────────┘
               │
               ▼
  ┌──────────────────────────────────┐  S5
  │ Execute touch event processing.   │
  └──────────────────────────────────┘
```

Fig.6A

Y coordinates

A(X1,Y1)

C(W1,Y3)

Y1-Y2

Y3-Y2

D

E

B'(W1+X2,Y2)

X2

W1+X2-X1

(0,0)          (W1,0)          X coordinates

Fig.6B

Fig.7

Fig.8

simultaneous touch event control unit

100 processing unit

120

130
touch event
processing unit

123
pseudo-touch
event generation unit

122
coordinate
conversion unit

150
image
processing unit

121
touch event
judging unit

110
touch event
detection unit

140
display control unit

200 display unit

210
display

220
display

input unit
300

touch panel

touch panel

310

320

EP 2 495 638 A1

25

Fig.9A

Fig.9B

Fig.10

Fig.11

| INTERNATIONAL SEARCH REPORT | International application No. |
|---|---|
| | PCT/JP2010/066759 |

**A. CLASSIFICATION OF SUBJECT MATTER**
*G06F3/041*(2006.01)i, *G06F3/048*(2006.01)i, *G06F3/14*(2006.01)i, *G09G5/00*
(2006.01)i

According to International Patent Classification (IPC) or to both national classification and IPC

**B. FIELDS SEARCHED**

Minimum documentation searched (classification system followed by classification symbols)
G06F3/041, G06F3/048, G06F3/14, G09G5/00

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-211547 A (Seiko Epson Corp.), 17 September 2009 (17.09.2009), entire text; all drawings (Family: none) | 1-27 |
| A | JP 04-326152 A (Hitachi, Ltd.), 16 November 1992 (16.11.1992), entire text; all drawings (Family: none) | 1-27 |
| A | JP 2002-304256 A (Sony Corp.), 18 October 2002 (18.10.2002), entire text; all drawings (Family: none) | 1-27 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 December, 2010 (28.12.10) | 11 January, 2011 (11.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/066759

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2009-522669 A  (Apple Inc.),<br>11 June 2009 (11.06.2009),<br>entire text; all drawings<br>& US 2007/0152984 A1    & WO 2007/079425 A2 | 1-27 |

Form PCT/ISA/210 (continuation of second sheet) (July 2009)

**REFERENCES CITED IN THE DESCRIPTION**

**Patent documents cited in the description**

- JP 2009522669 A
- JP 2002304256 A
- JP 2009760338 A
- JP 2009248066 A